(19) **Europäisches Patentamt**

**European Patent Office**

**Office européen des brevets**

(11) Veröffentlichungsnummer: **0 259 725 B1**

(12) **EUROPÄISCHE PATENTSCHRIFT**

(45) Veröffentlichungstag der Patentschrift: **23.12.92**

(21) Anmeldenummer: **87112570.4**

(22) Anmeldetag: **28.08.87**

(51) Int. Cl.⁵: **F16L 3/01**, B66C 13/12

(54) **Energieführungsschlauch.**

(30) Priorität: **12.09.86 DE 3631183**

(43) Veröffentlichungstag der Anmeldung:
**16.03.88 Patentblatt 88/11**

(45) Bekanntmachung des Hinweises auf die
Patenterteilung:
**23.12.92 Patentblatt 92/52**

(84) Benannte Vertragsstaaten:
**CH DE FR GB IT LI**

(56) Entgegenhaltungen:
**DE-A- 3 139 737**
**GB-A- 946 714**

(73) Patentinhaber: **Gebr. Hennig GmbH**
**Dorfstrasse 41**
**W-8045 Ismaning(DE)**

(72) Erfinder: **Hennig, Kurt**
**Georgensteinstrasse 16**
**W-8000 München 71(DE)**

(74) Vertreter: **Tetzner, Volkmar, Dr.-Ing. Dr. jur.**
**Van-Gogh-Strasse 3**
**W-8000 München 71(DE)**

Rank Xerox (UK) Business Services

## Beschreibung

Die Erfindung betrifft einen zwischen einer Strecklage und einer gekrümmten Lage abbiegbaren Energieführungsschlauch, gemäß dem Oberbegriff des Patentanspruches 1.

Energieführungsschläuche der vorausgesetzten Art werden verwendet, um beispielsweise elektrische Leitungen, Betriebsmittelschläuche und dergleichen, die zwischen beweglichen und stationären Maschinen- und Einrichtungsteilen angeordnet sind, schützend darin aufzunehmen.

Bei einer bekannten Ausführung der im Oberbegriff des Anspruches 1 beschriebenen Art (DE-A-31 39 737) setzt der Energieführungsschlauch sich aus einer Vielzahl von aneinandergereihten, C-förmig gestalteten Schlauchgliedern zusammen, die aus doppelrinnenartigen Profilen etwa ringartig gebogen sind und zum Herstellen bzw. Lösen ihrer gegenseitigen Verbindung miteinander verhakt bzw. auseinandergehakt werden können. Wenn bei dieser bekannten Ausführung der an der einen Schlauchseite vorhandene, durchgehende Längsschlitz durch ein biegsames Abdeckband verschlossen sein soll, dann weist dieses an seinen Längsrändern etwa U-förmig abgebogene Umbördelungen auf, die mit Schlauchgliedern dadurch lösbar verbunden sind, daß an den gegeneinander gerichteten Enden der C-förmigen Schlauchglieder eine Vielzahl von gesonderten Haltelaschen angebracht ist, die etwa entgegengesetzt zu den Umbördelungen der Längsränder vom Abdeckband umgebogen sind, so daß die umgebogenen Haltelaschen der Schlauchglieder mit den Umbördelungen an den Längsrändern des Abdeckbandes ineinander verhakt werden. Diese Art der lösbaren Verbindung zwischen dem biegsamen Abdeckband und den Schlauchgliedern bedingt zum einen einen ganz beträchtlichen Herstellungsaufwand und schafft zum anderen meist nicht die gewünschte Stabilität des fertigen Energieführungsschlauches.

Der Erfindung liegt daher die Aufgabe zugrunde, einen Energieführungsschlauch der im Oberbegriff des Patentanspruches 1 vorausgesetzten Art zu schaffen, der sich bei zuverlässiger, haltbarer Verbindung des biegsamen Abdeckbandes mit wenigstens einigen Schlauchgliedern durch seine besonders einfache Herstellbarkeit sowie durch einen verbesserten Zusammenhalt der miteinander verbundenen C-förmig gestalteten Schlauchglieder untereinander auszeichnet.

Diese Aufgabe wird erfindungsgemäß durch die im Kennzeichen des Anspruches 1 angegebenen Merkmale gelöst.

Vorteilhafte Ausgestaltungen der Erfindung sind Gegenstand der Unteransprüche.

Im Gegensatz zu der weiter oben beschriebenen bekannten Ausführung (DE-OS 31 39 737) brauchen bei der erfindungsgemäßen Ausbildung des Energieführungsschlauches an den einander gegenüberliegenden Enden der einzelnen C-förmigen Schlauchglieder keinerlei Befestigungselemente vorgesehen zu werden. Durch die erfindungsgemäße Konstruktion insbesondere des Abdeckbandes mit den erläuterten Klammern braucht das Abdeckband in den Längsschlitz des vormontierten, offenen und mit den entsprechenden Energieführungsleitungen versehenen Schlauch lediglich so eingeführt zu werden, daß die einander zugewandten Enden der Schlauchglieder auf der einen Seite vom Abdeckband abgedeckt werden, während wenigstens einige der einander gegenüberliegenden Enden der C-förmigen Schlauchglieder von den Klammern bzw. Klammerenden hintergriffen, d.h. unter- oder übergriffen werden. Durch die Ausbildung, Anzahl und Verteilung der Klammern kann für jede Größe und Verwendungsart des erfindungsgemäßen Energieführungsschlauches eine äußerst einfache Gesamtmontage sowie ein für jeden Anwendungsfall ausreichend stabiler Zusammenhalt zwischen den einzelnen Schlauchgliedern geschaffen werden. Der Schlauch selbst kann dadurch sowohl von außen als auch nach innen besonders gut stabilisiert werden.

Dieser erfindungsgemäße Energieführungsschlauch kann vollkommen aus Metall (Metallblech) oder aus geeignetem Kunststoff oder zum Teil aus Metallblech und zum Teil aus Kunststoff hergestellt sein.

Die Erfindung sei im folgenden anhand einiger in der Zeichnung veranschaulichter Ausführungsbeispiele näher erläutert. In der zum Teil ganz schematisch gehaltenen Zeichnung zeigen

Fig. 1 eine Perspektivansicht eines Schlauch-Längsabschnittes in zum Teil abgebogenem Zustand,

Fig. 2 einen Querschnitt durch den Energieführungsschlauch, etwa gemäß Schnittlinie II-II in Fig. 1;

Fig. 3 eine Teil-Schnittansicht entlang der Linie III-III in Fig. 2, bei auseinandergezogenem Zustand des Schlauches;

Fig. 4 eine ähnliche Querschnittsansicht wie in Fig. 2, jedoch in umgekehrter Darstellung;

Fig. 5 eine Teil-Schnittansicht entlang der Linie V-V in Fig. 4, bei zusammengeschobenem Zustand des Schlauches;

Fig. 6 eine Teil-Ansicht aus dem Innern des Schlauches auf den Bereich des Längsschlitzes mit eingeschobenem Abdeckband, wobei die obere und untere Hälfte dieser Fig. unterschiedliche Ausbildungen der C-förmigen Schlauchglieder enthalten;

Fig. 7 eine Detailansicht im Bereich der einen Längskante des Längsschlitzes, zur Erläuterung einer Abwandlung für die Halterung des Abdeckbandes;

Fig.8 eine Querschnittsansicht durch eine Ausführungsform des Energieführungsschlauches als Doppelschlauch;

Fig.9 eine Teil-Seitenansicht des Schlauches mit einer Nachstelleinrichtung;

Fig.10 eine Stirnansicht auf die Nachstelleinrichtung gemäß Fig.9 (Ansicht X in Fig.9);

Fig.11 eine Teil-Seitenansicht des Schlauches mit einer anderen Ausführungsform einer Nachstelleinrichtung;

Fig.12 eine perspektivische Teilansicht von einem Schlauch, bei dem die Klammern die Außenseite der entsprechenden Abschnitte der Schlauchglieder übergreifen;

Fig.13 eine Querschnittsansicht des Schlauches, etwa entsprechend Pfeil XIII in Fig.12;

Fig.14 eine Teil-Seitenansicht des in Fig.12 gezeigten Schlauches;

Fig.15 eine Aufsicht auf eine Schlauchausführung, die gegenüber dem Beispiel der Fig.12 bis 14 etwas modifiziert ist;

Fig.16 eine Teil-Längsschnittansicht lediglich des Abdeckbandes und der darauf befestigten Klammern, etwa entsprechend Schnittlinie XVI-XVI in Fig.15;

Fig.17 eine vergrößerte Teil-Längsschnittansicht ähnlich Fig.16, jedoch von einer weiteren Abwandlung der Ausführungsform der Fig.12 bis 14;

Fig.18 eine Aufsicht auf die Klammerausführung gemäß Fig.17.

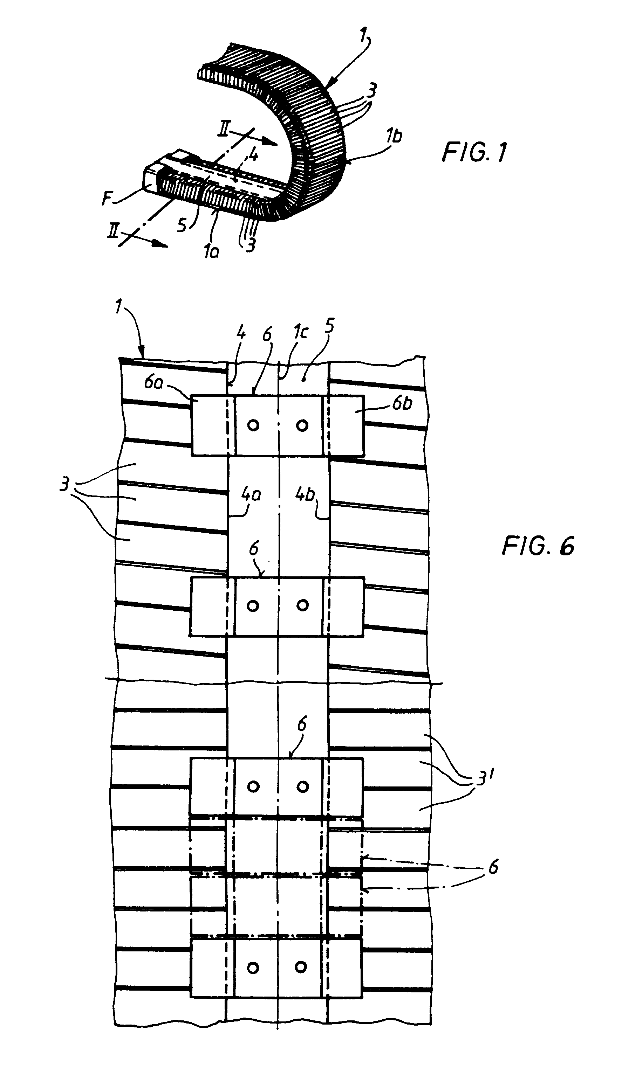

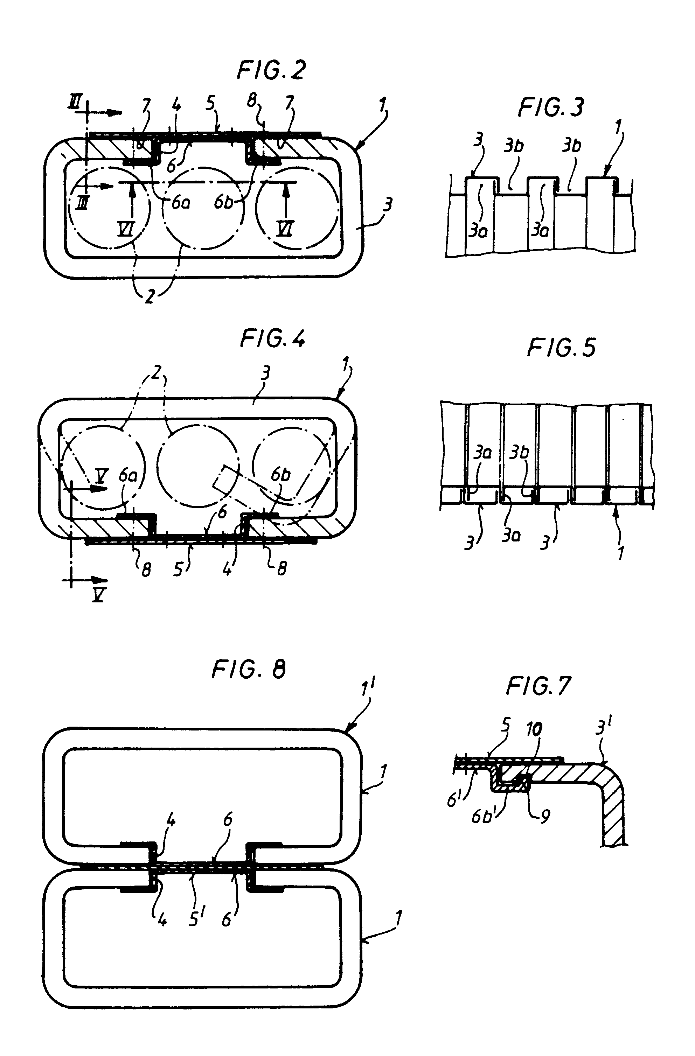

Anhand Fig.1 sei zunächst der allgemeine Aufbau eines erfindungsgemäß ausgebildeten Energieführungsschlauches erläutert. Wie in dieser Fig.1 zu erkennen ist, kann der Energieführungsschlauch 1 zwischen einer Strecklage (Schlauchlängsabschnitt 1a) und einer gekrümmten Lage (Schlauchlängsabschnitt 1b) abgebogen werden. Wie an sich bekannt ist, kann dabei das eine Ende dieses Schlauches 1 an einem stationären Teil einer Maschine oder Einrichtung befestigt sein (beispielsweise mit Hilfe eines C-förmig gestalteten Anschlußflansches F), während das andere Schlauchende an einem beweglichen Teil einer Maschine oder Einrichtung angebracht ist (mit einem gleichartigen Anschlußflansch). Im Innern des Schlauches 1 können je nach Größe und Ausbildung mehr oder weniger Energieführungsleitungen (z.B. Kabel und Schläuche) 2 - wie in Fig.2 und 4 strichpunktiert angedeutet - nach außen geschützt untergebracht sein.

Wie nachfolgend noch im einzelnen erläutert wird, enthält der Schlauch 1 ebenfalls C-förmig gestaltete Schlauchglieder 3, wodurch an der einen Längsseite des Schlauches 1 ein durchgehender Längschlitz 4 gebildet ist. Dieser Längsschlitz 4 ist durch ein biegsames Abdeckband 5 verschlossen, das in noch näher zu erläuternder Weise mit wenigsten einigen Schlauchgliedern 3 lösbar verbunden ist.

Die Ausbildung der C-förmig gestalteten Schlauchglieder 3 sowie des Abdeckbandes 5 sei nachfolgend an den Beispielen gemäß Fig. 2 bis 6 näher erläutert.

In den Fig. 2 und 4 ist die C-förmige Gestaltung der Schlauchglieder 3 und somit die Querschnittsform des Energieführungsschlauches 1 zu erkennen. Die Teil-Schnittansicht gemäß Fig. 3 zeigt einige Schlauchglieder 3, wie sie mit ihrem Querschnittsprofil ausgebildet sind und wie benachbarte Schlauchglieder 3 derart ineinander greifen, daß sie begrenzt gegeneinander beweglich sind. Es läßt sich erkennen, daß die Schlauchglieder 3 - grob gesagt - ein etwa S-förmiges, eckiges Querschnittsprofil mit entgegengesetzt offenen Rinnenausbildungen 3a bzw. 3b aufweisen. In der Darstellung der Fig. 3 befindet sich der Energieführungsschlauch 1 in seinem am weitesten auseinandergezogenem Zustand, in dem die Rinnenausbildungen 3b der Schlauchglieder nach außen vollkommen offen sind; und es läßt sich gut erkennen, daß dieser auseinandergezogene Zustand durch das Ineinandergreifen der Querschnittsprofile benachbarter Schlauchglieder 3 begrenzt ist. In Fig.2 sei angenommen, daß sich die Längsseite des Schlauches 1, in der der durchgehende Längsschlitz 4 und das Abdeckband 5 vorgesehen sind, im auseinandergezogenen Zustand befindet und darin festgelegt bzw. gesperrt ist; diese im auseinandergezogenen Schlauchzustand gesperrte Längsseite ist daher grob schraffiert angedeutet. Bei dieser Ausbildung, Anordnung und Festlegung des Schlauches 1 kann der Schlauch um eine Achse gekrümmt werden, die außerhalb der der schraffiert angedeuteten Längsseite (mit Abdeckband) gegenüberliegenden Längsseite des Schlauches liegt.

Geht man davon aus, daß - wie in den Fig.4 und 5 angedeutet - der Schlauch 1 sich in seinem vollkommen zusammengeschobenen Zustand befindet und darin an seiner mit dem Längsschlitz 4 versehenen, in Fig.4 grob schraffiert dargestellten Längsseite durch die Ausbildung und Anordnung des Abdeckbandes gesperrt ist, dann kann man diesen Schlauch nur um eine Achse krümmen, die - in Fig.4 - unterhalb der schraffiert angedeuteten Schlauchlängsseite liegt; diese Krümmung entspricht etwa der in Fig.1 dargestellten (Schlauchlängsabschnitt 1b).

Versucht man dagegen bei den zuvor anhand der Fig.1 bis 5 geschilderten Sperrmöglichkeiten der Schlauchglieder 3 und Krümmungsmöglichkeiten des Schlauches 1 diesen entgegengesetzt zu krümmen, dann ist dies je nach Anzahl und Verteilung der Festlegungs-bzw. Sperrpunkte zwischen Abdeckband und Schlauchglieder 3 kaum oder gar nicht möglich, sondern der Schlauch nimmt dann seine Strecklage ein, wie sie durch den Schlauchlängsabschnitt 1a in Fig. 1 angedeutet ist.

In dem hier veranschaulichten Ausführungsbeispiel sind auf der zum Innern des Schlauches 1 weisenden Innenseite des Abdeckbandes 5 - wie auch in Fig. 6 besonders deutlich dargestellt ist - quer bzw. rechtwinklig zur Bandlängsrichtung bzw. zur Schlauchlängsachse 1c verlaufende Klammern 6 befestigt, vorzugsweise angenietet (oder gegebenenfalls punktgeschweißt) die in Längsrichtung des Abdeckbandes 5-wie durch ausgezogene Linien dargestellt - mit gleichmäßigen Abständen voneinander verteilt sind (vergleiche Fig. 6). Wenn eine besonders hohe Stabilität und ein entsprechend großer Zusammenhalt der C-förmigen Schlauchglieder 3 untereinander gewünscht wird, dann ist es zweckmäßig, die Abstände zwischen den einzelnen Klammern 6 zu verkleinern oder - wie in Fig. 6 in der unteren Hälfte strichpunktiert angedeutet - zumindest in einem Längsabschnitt des Schlauches 1 (oder auch in mehreren Längsabschnitten) die Klammern 6 aneinander anliegend oder aneinander angrenzend am Abdeckband 5 zu befestigen.Hinsichtlich eines stabilen Zusammenhalts benachbarter Schlauchglieder 3 kann es ferner von Vorteil sein, wenn die einander entgegengesetzt liegenden beiden Enden 6a bzw. 6b jeder Klammer 6 wenigstens 2 zugehörige Schlauchglieder 3 hintergreifen, unter- oder übergreifen. Es kann jedoch vielfach auch ausreichend sein, wenn die gegenüberliegenden Enden 6a und 6b jeder Klammer 6 jeweils zumindest ein C-förmiges Schlauchglied 3 im Bereich der beiden gegenüberliegenden Längsränder 4a und 4b des Längsschlitzes 4 hintergreifen, wie es in den Fig. 2, 4 und 6 zu erkennen ist.

Die Klammern 6 sind vorzugsweise aus flachen, entsprechend abgekanteten Blechstreifen hergestellt. Hierdurch ist - vgl. Fig.2 und 4 - zwischen den die Schlauchglieder 3 hinter- bzw. untergreifenden Enden 6a bzw. 6b und dem Abdeckband 5 jeweils ein U-förmiger Führungskanal 7 gebildet, in dem die den Längsschlitz 4 begrenzenden Kanten der Schlauchglieder 3 gleitend geführt sind. Auf diese Weise kann das Abdeckband problemlos in den Längsschlitz 4 eingeschoben werden.

Um bei dieser Ausbildung des Abdeckbandes 5 mit den Klammern 6 die zugehörige Längsseite des Schlauches 1 - in seinem auseinandergezogenem (Fig. 2 und 3) oder zusammengeschobenen (Fig. 4 und 5) Zustand - in der oben erläuterten Weise zu sperren, kann wenigstens eine Klammer 6 bzw. können wenigstens die Enden 6a und 6b einer Klammer mit den zugehörigen Schlauchgliedern 3 fest, jedoch lösbar verbunden werden. Dies kann auf einfache Weise mit Hilfe von Sperrstiften, Schrauben oder dergleichen geschehen, wie es in den Fig. 2 und 4 lediglich durch strichpunktierte Mittellinien 8 angedeutet ist.

Eine andere Möglichkeit eines solchen Sperrens ist in der Detaildarstellung der Fig. 7 veranschaulicht.

Hiernach können wenigstens einige Klammern 6' an ihren Enden 6b' einen gegen die Innenseite des zugehörigen Schlauchgliedes 3' gerichteten Vorsprung 9 aufweisen, der in eine passende Ausnehmung 10 an der Innenseite des Schlauchgliedes 3' eingreift.

Es sei an dieser Stelle auch darauf hingewiesen, daß es zwar bevorzugt wird, die Klammern 6 an der zum Innern des Schlauches weisenden Innenseite des Abdeckbandes 5 zu befestigen, daß es aber mit gleich gutem Halterungseffekt vorgesehen sein kann, daß die Klammern 6 auf der gegenüber liegenden Außenseite des Abdeckbandes befestigt sind, wobei dann jedoch das Abdeckband selbst im Schlauchinnern liegt und die Klammern 6 den Schlauch an der Außenseite hinter- bzw. übergreifen.

In Fig. 6 ist ferner zu erkennen, daß etwa in der oberen Hälfte dieser Fig. die C-förmigen Schlauchglieder 3 etwa wendelförmig bzw. schraubenlinienförmig gestaltet sind. Dies kann dadurch erzielt werden, daß die Schlauchglieder 3 Teile eines wendelförmig bzw. schraubenlinienförmig gewickelten und nachträglich in Längsrichtung aufgeschlitzten, an sich bekannten Ausgangsschlauches sind. Diese Art der Herstellung des Energieführungsschlauches führt zu einem besonders guten Zusammenhalt der einzelnen Schlauchglieder 3 untereinander, wobei ein auf diese Weise aus wendelförmigen und C-förmigen Schlauchgliedern hergestellter Schlauch bereits ohne das in den Längsschlitz eingeschobene Abdeckband einen relativ stabilen Zusammenhalt besitzt, was sich besonders bei der Montage des Schlauches und dem Anordnen der Energieführungsleitungen darin als besonders vorteilhaft erweist.

Etwa in der unteren Hälfte der Fig. 6 ist eine Ausführungsart von C-förmig gestalteten Schlauchgliedern 3' zu erkennen, wonach diese Schlauchglieder 3' als C-förmige Einzelglieder hergestellt und im wesentlichen rechtwinklig zur Schlauchlängsachse 1c verlaufend zu der vorbestimmten Schlauchlänge miteinander verbunden sind.

Die zuletzt genannte Ausführungsform der Schlauchglieder 3' ist ganz besonders für ein leichtes Herstellen und auch nachträgliches Verändern der jeweils gewünschten Schlauchlänge geeignet, wobei die einander benachbarten Schlauchglieder auf einfache Weise (mit ihren weiter oben geschilderten Querschnittsprofilen) ineinander gehakt oder auseinandergehakt werden können. Aber auch die wendelförmig gestalteten C-förmigen Schlauchglieder 3 gestatten ein relativ einfaches Verlängern oder Verkürzen bzw. Herstellen eines Energieführungsschlauches in gewünschter Länge, was ebenfalls durch ein zweckmäßiges Ineinanderhaken bzw. Auseinanderhaken der Querschnittsprofile benachbarter Schlauchglieder geschieht. Zum Zwecke des Ineinanderhakens und Auseinanderhakens können die einzelnen Schlauchglieder im Bereich ihrer freien Gliederenden gegeneinander bzw. zusammengedrückt werden, so daß sich das Auseinanderhaken bzw. Zusammenhaken benachbarter Schlauchglieder bewerkstelligen läßt. Selbst wenn gegebenenfalls bei neu hinzugefügten Schlauchgliedern die ursprüngliche C-Form nicht gleich wieder eingenommen werden kann, so kann dies durch einfaches Zurückbiegen und gegebenenfalls durch Verwendung von kunststoffartigem Kleber oder dergleichen mit wenig Aufwand erreicht werden. Im übrigen werden die unter Umständen nicht ganz in ihre ursprüngliche C-Form zurückgeführten Schlauchglieder zwangsläufig durch das Einführen bzw. Einschieben des Abdeckbandes 5 in den Schlauchlängsschlitz in ihre korrekte Lage gebracht. Das Zusammenbiegen der freien C-Enden eines Schlauchgliedes 3 ist in Fig. 4 gestrichelt angedeutet.

Das geschilderte Abdeckband 5 bildet gleichzeitig ein Spannband für den gesamten Energieführungsschlauch.

Während in den genannten Zeichnungsfiguren ein im wesentlichen flaches Abdeckband 5 veranschaulicht ist, besteht ferner die Möglichkeit, dieses Abdeckband in Querrichtung des Schlauches mehr oder weniger leicht zu bombieren bzw. zu wölben, was einer weiteren Stabilisierung und Tragfähigkeit des Schlauches 1 zuträglich ist.

Außerdem sei darauf hingewiesen, daß auf wenigstens einer Schlauchlängsseite zusätzlich - in an sich bekannter Weise - in Längsrichtung verlaufende Sperrbänder angebracht sein können, durch die der Energieführungsschlauch in seiner maximalen Krümmung zusätzlich begrenzt werden kann. Ebenso ist es möglich, auf den Schlauchlängsseiten in wenigstens einigen Rinnenausbildungen der Schlauchglieder in an sich bekannter Weise Füllmaterial (in auseinandergezogenem Zustand des Schlauches) einzubringen, wodurch der Schlauch an ausgewählten Abschnitten seiner Länge gegenüber einer Verkürzung (einem Zusammenschieben) zusätzlich gesperrt werden kann.

Die Querschnittsform des Energieführungsschlauches 1 kann grundsätzlich jede geeignete Ausbildung (z. B. rechteckig, quadratisch oder dergleichen) aufweisen. Die in der Zeichnung veranschaulichte rechteckige Querschnittsform zeichnet sich jedoch durch eine besonders große Stabilität der Schlauchglieder 3,3′ und somit des ganzen Schlauches 1 in seinem Querschnitt aus. Die dabei im rechten Winkel zueinander stehenden Seiten des Rechteckquerschnittes führen zu einer besonders vorteilhaften Eckenaussteifung, wozu auch zusätzlich der gewählte und in den Fig. 3 und 5 veranschaulichte Querschnitt des Profilbandes beiträgt, aus dem die Schlauchglieder 3 bzw. 3′ gewickelt bzw. gebogen sind.

Während bei den oben anhand der Fig. 1 bis 7 erläuterten Ausführungen jeweils von einem Einzelschlauch ausgegangen worden ist, besteht in vorteilhafter Weise auch die Möglichkeit, den Energieführungsschlauch in Form eines Doppelschlauches auszubilden, wie er in Fig. 8 veranschaulicht ist. Ein solcher Doppelschlauch 1′ kann auf äußerst einfache Weise dadurch hergestellt werden, daß zwei Einzelschläuche 1 in der anhand der Fig. 2 und 4 geschilderten und veranschaulichten Ausbildung mit ihren den Längsschlitz 4 enthaltenden Längsseiten aneinandergelegt sind. Diese beiden identisch hergestellten Einzelschläuche 1 sind somit mit ihren Längsschlitzen 4 gegeneinander gerichtet, wodurch sie sehr einfach durch ein gemeinsames Abdeckband 5′ für ihre Längsschlitze 4 miteinander verbunden werden können. Bei diesem Abdeckband 5′ sind dann - im Gegensatz zu den Ausführungen gemäß Fig. 2, 4 und 6 - auf beiden Längsseiten (Breitseiten) Klammern 6 in der geschilderten Ausführung und Anordnung angebracht.

Bei der Ausbildung des Doppelschlauches 10 gemäß Fig. 8 sei daher angenommen, daß vom unteren Schlauch 1 die gegen den oberen Schlauch weisende Längsseite im auseinandergezogenen Zustand gesperrt ist (entsprechend den Erläuterungen zu den Fig. 2 und 3), während vom oberen Schlauch 1 die gegen den unteren Schlauch weisende Längsseite im zusammengeschobenen Zustand des Schlauches gesperrt ist (entsprechend den Erläuterungen zu den Fig. 4 und 5).

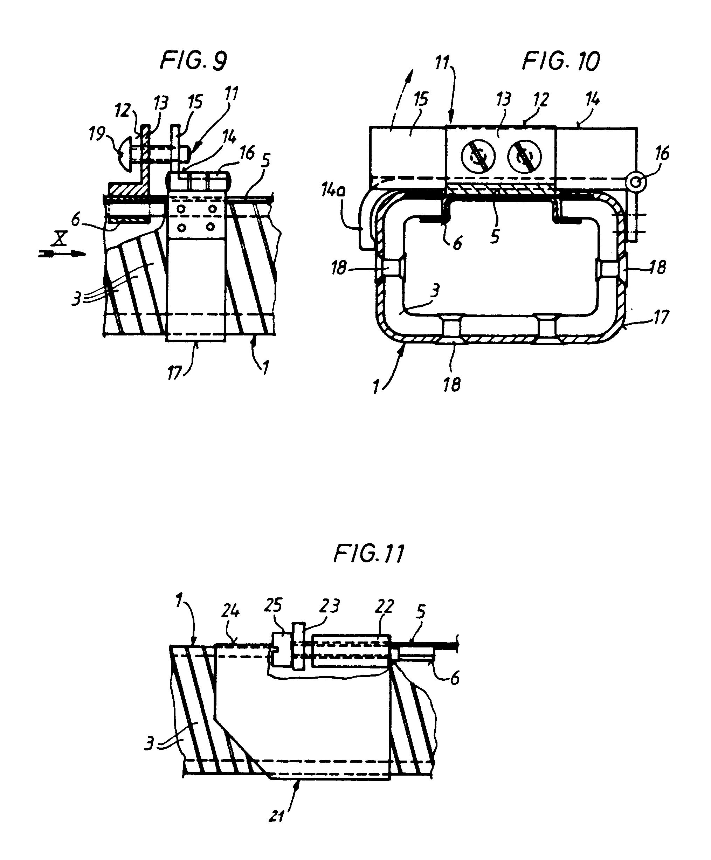

Für den Energieführungsschlauch besteht ferner, vorzugsweise zusätzlich, noch die Möglichkeit, über die Länge des Schlauches 1 wenigstens eine Einrichtung vorzusehen, die zum nachstellenden Auseinanderziehen und Zusammenschieben des Schlauches in seiner Längsrichtung gegenüber dem Abdeckband 5 dient. Eine erste Ausführungsform einer solchen Einrichtung sei anhand der Fig. 9 und 10 beschrieben, wobei davon ausgegangen sei, daß der Schlauch 1 ansonsten gleichartig ausgebildet ist, wie er allgemein anhand der Fig. 1 bis 6 bzw. 7 beschrieben worden ist.

Bei der in den Fig. 9 und 10 veranschaulichten Ausführungsform enthält die erwähnte Nachstelleinrichtung 11 einen am Abdeckband 5 befestigten ersten Einrichtungsteil in Form eines sich rechtwinklig zur Längsachse des Schlauches sowie auf dem Abdeckband 5 erstreckenden und auf diesem Abdeckband 5 befestigten Halterungswinkels 12.

Dieser Halterungswinkel 12 besitzt einen aufrecht stehenden, flanschartigen Schenkel 13 und kann vorzugsweise durch Punktschweißen oder Nieten auf der Oberseite (Außenseite) des Abdeckbandes 5 befestigt sein.

Ferner enthält die Nachstelleinrichtung 11 einen zweiten Einrichtungsteil, der vor allem durch einen sich ebenfalls rechtwinklig zur Längsachse des Schlauches und sich quer über die ganze Schlauchbreite erstreckenden Halterungsbügel 14 gebildet ist, der einen parallel zum Schenkel 13 des Halterungswinkels 12 verlaufenden, aufrecht stehenden, flanschartigen Bügelschenkel 15 besitzt. An der einen Außenlängsseite des Schlauches 1 ist dieser Halterungsbügel 14 über ein Schwenkgelenk 16 wegklappbar bzw. wegschwenkbar gehalten. Zu diesem Zweck wird das Schwenkgelenk 16 und damit auch der Halterungsbügel 14 von einer etwa C-förmigen, manschettenartigen Halterung 17 getragen, die dem Außenumfang der Schlauchglieder 3 angepaßt und an wenigstens einem dieser Schlauchglieder 3 befestigt ist, was vorzugsweise - wie in Fig. 10 angedeutet - mit Hilfe von Nieten 18 geschieht. Auf der dem Schwenkgelenk 16 entgegengesetzten Längsseite des Schlauches 1 übergreift das freie Ende 14a des Halterungsbügels 14 diesen Schlauchlängsabschnitt in der Weise, daß der Bügel in seinem Betriebszustand (gemäß Fig. 10) sicher festgelegt ist, wozu zusätzlich noch eine nicht näher dargestellte Schraube oder dergleichen vorgesehen sein kann.

Der Halterungswinkel 12 auf dem Abdeckband 5 und der Halterungsbügel 14 auf dem Schlauch 1 weisen - wie Fig. 9 zeigt - einen geeigneten Abstand voneinander auf. Die beiden Schenkel 13 und 15 des Halterungswinkels 12 und des Halterungsbügels 14 sind durch wenigstens eine spindelartige Einstellschraube 19 derart miteinander in Schraubverbindung, daß sie relativ gegeneinander verlagerbar sind, so daß dadurch der im Bereich dieser Nachstelleinrichtung 11 befindliche Längsabschnitt des Schlauches 1 in entsprechender Weise auseinandergezogen oder zusammengeschoben werden kann. Auf diese Weise besteht eine weitere Möglichkeit, die Krümmung bzw. Abbiegbarkeit des Energieführungsschlauches 1 zu beeinflussen.

Anhand Fig. 11 sei eine zweite Ausführungsmöglichkeit der Nachstelleinrichtung erläutert. Auch in diesem Falle sei davon ausgegangen, daß der Schlauch 1 ansonsten gleichartig ausgeführt sein kann, wie es anhand der Fig. 1 bis 6 allgemein geschildert ist.

Bei diesem zweiten Ausführungsbeispiel wird der erste Einrichtungsteil dieser Nachstelleinrichtung 21 durch einen an einer Klammer 6 des Abdeckbandes 5 befestigten Innengewindeteil gebildet, der beispielsweise in Form einer Gewindemuffe oder einer Gewindemutter 22 ausgebildet sein kann. Der zweite Einrichtungsteil der Nachstelleinrichtung 21 wird insbesondere durch einen sich rechtwinklig zur Schlauchlängsachse und quer über die ganze Schlauchbreite erstreckenden, bügelartigen Halterungsflansch 23 gebildet, der in gleichartiger Weise wie der Halterungsbügel 14 beim vorhergehenden Beispiel (Fig. 9 und 10) an der einen Außenlängsseite des Schlauches 1 über ein Schwenkgelenk hochklappbar angeordnet und ausgebildet sein kann (da dies in etwa gleichartiger Weise ausgeführt sein kann wie im vorhergehen Beispiel, ist die gelenkige Anordnung nicht nochmals veranschaulicht). Dieser Halterungsflansch 23 wird wiederum von einer manschettenartigen, etwa C-förmigen Halterung 24 getragen, die dem Außenumfang der Schlauchglieder 2 angepaßt und an wenigstens einem Schlauchglied angenietet ist.

Wie in Fig. 11 zu erkennen ist, besitzt der Halterungsflansch 23 einen axialen Abstand zum Innengewindeteil 22. Ferner trägt dieser Halterungsflansch 23 eine spindelartige Einstellschraube 25 derart, daß ihr Gewindeabschnitt in den Innengewindeteil 22 eingreift und daß durch diese Anordnung wiederum der zugehörige Schlauchlängsabschnitt auseinandergezogen und zusammengeschoben werden kann, wenn die Einstellschraube 25 in entsprechender Weise gedreht wird. Diese zweite Ausführungsform der Nachstelleinrichtung kann besonders raumsparend angebracht werden.

In jedem Falle wird es jedoch zweckmäßig sein, die genannte Nachstelleinrichtung so auszubilden und am Schlauch anzuordnen, daß für eine günstige äußere Zugänglichkeit der Einstellschraube bzw. Einstellschrauben gesorgt ist. Die Hochklappbarkeit des Halterungsbügels 14 bzw. des Halterungsflansches 23 sorgt dafür, daß bei der Montage von Energieführungsleitungen der Längsschlitz 4 des Schlauches 1 ungehindert zugänglich gemacht werden kann.

Es versteht sich von selbst, daß über die Länge des Energieführungsschlauches 1 mehrere solcher Nachstelleinrichtungen vorgesehen werden können, insbesondere, wenn es sich um relativ lange Schläuche handelt.

Im Zusammenhang mit den ersten Ausführungsformen der Erfindung sind insbesondere anhand der Fig.2 bis 8 Beispiele beschrieben worden, in denen die Klammern 6, 6' auf der zum Schlauchinnern weisenden Innenseite des Abdeckbandes 5, 5' befestigt sind und das Abdeckband den Schlitz 4 auf der Außenseite des Schlauches 1 abdeckt. Die Klammern 6, 6' sind dabei - jeweils bezogen auf die Querrichtung (Querschnitt) des Schlauches 1 - verhältnismäßig kurz ausgeführt, d.h. sie hinter- bzw. untergreifen die einander gegenüberliegenden Enden 6a, 6b der entsprechenden Schlauchglieder 3 jeweils nur so weit, daß sie eine zuverlässige Halterung bzw. zusammen mit dem Abdeckband 5, 5' einen gerade ausreichend großen, U-förmigen Führungskanal 7 bilden.

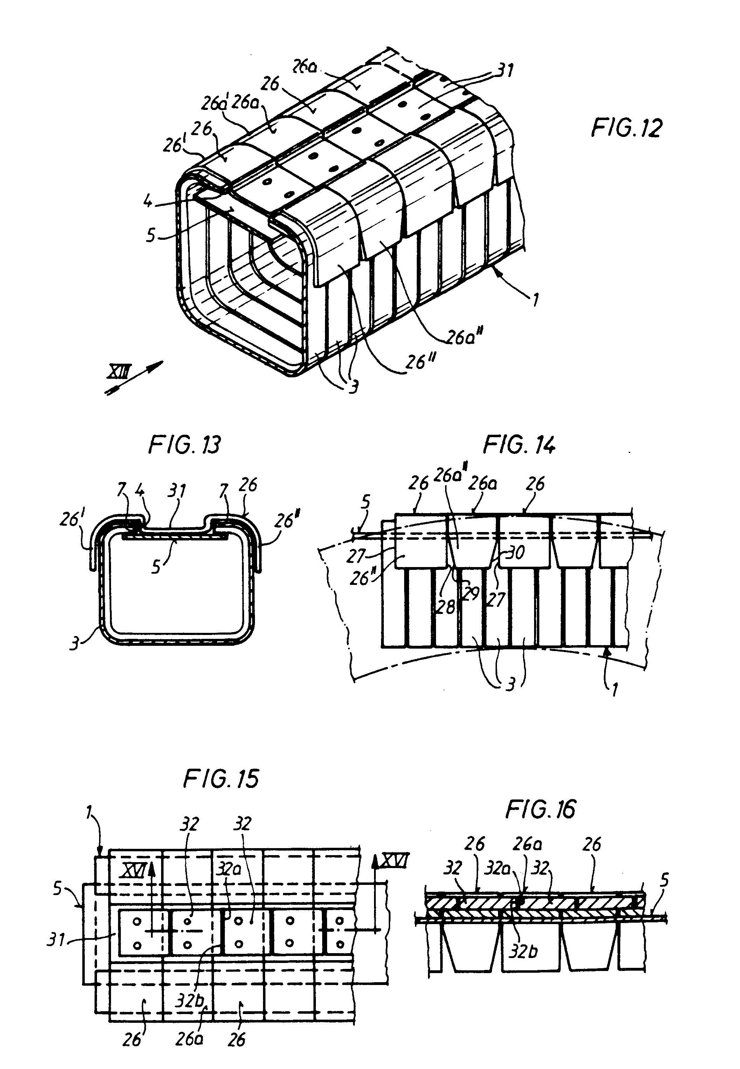

Bei der Erläuterung dieser ersten Ausführungsformen ist bereits darauf hingewiesen worden, daß die einzelnen Klammern 6 unmittelbar aneinanderliegend am Abdeckband 5 befestigt sein können und daß diese relativ kurzen Klammern 6, 6' nicht nur an der zum Schlauchinnern weisenden Innenseite des Abdeckbandes 5 sondern auch an der gegenüberliegenden Außenseite des Abdeckbandes befestigt sein können, wobei dann jedoch das Abdeckband selbst sich an der Schlauchinnenseite - den Schlitz abdeckend - befindet, während die Klammern auf der nach außen weisenden Seite des Abdeckbandes angebracht sind und dabei die Außenseite des Schlauches zu beiden Seiten des Schlitzes übergreifen. Bevorzugte Ausführungsformen hierfür seien nachfolgend anhand der Fig.12 bis 18 erläutert.

Bevor auf Einzelheiten dieser weiteren Beispiele eingegangen wird, sei festgestellt, daß dort der Einfachheit halber gleichartig zu den ersten Ausführungsbeispielen ausgebildete Teile mit denselben Bezugszeichen versehen sind, so daß diese gleichartigen Teile nicht nochmals im einzelnen beschrieben werden müssen.

Ein erstes Ausführungsbeispiel mit an der Schlauchinnenseite befindlichem Abdeckband 5 und die Schlauchglieder 3 bzw. den Schlauch 1 außen übergreifenden Klammern 26, 26a sei anhand der Fig.12 bis 14 erläutert. Auch hier wird durch das Abdeckband 5 wiederum der Längsschlitz 4 an der einen Längsseite des Schlauches 1 abgedeckt.

In Schlauchquerrichtung betrachtet (vgl. insbesondere Fig.12 und 13) handelt es sich bei den hier verwendeten Klammern 26, 26a um verhältnismäßig lange Klammern, die die Außenseite der C-förmigen Schlauchglieder 3 so weit übergreifen, daß die beiden entgegengesetzt gerichteten freien Klammerenden jeder Klammer abgewinkelte Seitenschenkel 26', 26'' bzw. 26a', 26a'' besitzen, d.h. in der Darstellung der Fig.12 und 13 sind diese Klammerseitenschenkel in enger Anpassung an die Außenkontur der C-förmigen Schlauchglieder 3 etwa rechtwinklig nach unten abgebogen, wobei diese Seitenschenkel 26', 26'' bzw. 26a', 26a'' sich nur über einen Teil (beispielsweise 1/4 bis 1/2) der Seitenhöhe (vgl. Fig.13) des Schlauchquerschnittes erstrecken. Wie bereits erwähnt worden ist, schließen bei dieser Ausführungsform alle einander benachbarten Klammern 26, 26a in Längsrichtung des Schlauches 1 unmittelbar aneinander an, wie es in Fig.12 und 14 dargestellt ist. Diese langen Klammern 26, 26a können in gleicher Weise wie bei den ersten Beispielen mittels Nieten oder durch Punktschweißen auf der Außenseite (nach außen weisende Breitseite) des Abdeckbandes 5 befestigt sein, wie es in diesen Figuren angedeutet ist.

Als weitere Besonderheit dieser in der Querschnittsform (vgl. Fig.12 und 13) alle gleichartig gebogenen Klammern 26, 26a bilden die einander benachbart gegenüberliegenden Seitenkanten 27, 28 bzw. 29, 30 der Seitenschenkel 26', 26'' bzw. 26a', 26a'' Anschlagkanten, die einerseits in der Strecklage des Schlauches 1 (ausgezogene Linien in Fig.14) einen Abstand voneinander aufweisen, während sie andererseits in der äußersten Krümmungslage (in Fig.14 nur ganz grob strichpunktiert angedeutet) aneinander anliegen und diese äußerste Krümmungslage des Schlauches 1 begrenzen. Zu diesem Zweck gibt es mehrere Möglichkeiten für die Ausbildung der Seitenschenkel 26', 26'' bzw. 26a', 26a''. Eine dieser Möglichkeiten ist in Fig.12 zu erkennen und in Fig.14 in einer reinen Seitenansicht des Schlauches 1 noch deutlicher veranschaulicht. Danach sind die Seitenschenkel 26' und 26'' der Klammern 26 in der Seitenansicht des Schlauches im wesentlichen rechteckig und die Seitenschenkel 26a' und 26a'' der Klammern 26a in der Seitenansicht des Schlauches 1 etwa trapezförmig ausgebildet, indem sie eine sich von der den Schlitz 4 enthaltenden Schlauchlängsseite zur entgegengesetzten Schlauchlängsseite verjüngende, symmetrische Trapezform besitzen, d.h. gemäß Fig.14 verjüngt sich die Trapezform nach unten. Wenn somit in Längsrichtung des Schlauches 1 sich Klammern 26 mit rechteckigen Seitenschenkeln 26', 26'' und Klammern 26a mit trapezförmigen Seitenschenkeln 26a', 26a'' einander abwechseln (vgl. Fig.12 und 14), dann leuchtet ohne weiteres ein, daß die jeweils einander gegenüberliegenden Seitenkanten 27 bis 30 von einander benachbarten Klammerseitenschenkeln, z.B. 26'' und 26a'', die äußerste Krümmungslage des Schlauches 1 zuverlässig begrenzen; diese äußerste Krümmungslage bzw. die Größe des Krümmungsradius kann dabei ohne weiteres durch die gewählte Trapezform beeinflußt werden.

Es sei in diesem Zusammenhang auch ausdrücklich erwähnt, daß die Seitenschenkel aller Klammern in der Seitenansicht des Schlauches 1 eine gleichartige Trapezform besitzen können, und zwar gleichartig wie die Seitenschenkel 26a' und 26a'', ohne daß dies noch gesondert veranschaulicht werden müßte. Eine solche Ausbildung der Klammerseitenschenkel eignet sich besonders für kleinere Krümmungsradien, und sie hat außerdem einen Vorteil insofern, als alle Klammern gleichartig ausgeführt sein können.

Gleichartig wie bei den ersten Ausführungsbeispielen sind auch diese langen Klammern 26, 26a - im Querschnitt des Schlauches 1 (Fig.12 und 13) betrachtet - mit einem Mittelabschnitt 31 ausgebildet, der bei allen Klammern 26, 26a die gleiche, etwa eckige U-Form besitzt. Wie in der Zeichnung (Fig.12 und 13) zu erkennen ist, ist dieser Mittelabschnitt 31 der Klammern 26, 26a von der Schlauchaußenseite her in den Schlitz 4 eingepaßt und fest mit dem Abdeckband 5 verbunden (angenietet oder punktgeschweißt). Auf diese Weise ergibt sich auch hier wiederum der U-förmige Führungskanal 7, in dem die den Längsschlitz 4 begrenzenden Kanten der gegeneinander weisenden Schlauchglieder 3 gleitend geführt sind.

In den Fig.15 und 16 ist eine Weiterbildung der zuvor anhand der Fig.12 bis 14 erläuterten Ausführungsform veranschaulicht, so daß auch hier wiederum gleiche Teile mit denselben Bezugszeichen versehen sind.

In dieser modifizierten Ausführungsform des vorhergehenden Ausführungsbeispieles ist auf der flachen Außenseite der Mittelabschnitte 31 aller Klammern 26, 26a jeweils eine ebene Anschlagplatte 32 befestigt, die eine flache rechteckige Form besitzt (vgl. Fig.15). Diese Anschlagplatten 32 sind nun in der Weise auf den Klammermittelabschnitten 31 befestigt, daß von den in Längsrichtung des Schlauches 1 aneinander anschließenden Klammern 26, 26a jede Klammer, z.B. 26, von der Anschlagplatte 32 der einen benachbarten Klammer (z.B. 26a), etwas übergriffen wird, während die zu ihr gehörige Anschlagplatte 32 den Mittelabschnitt 31 der anderen benachbarten Klammer 26a etwas übergreift. Hierbei liegen die Anschlagplatten 32 aller einander benachbarten Klammern 26, 26a mit ihren gegeneinander gerichteten Anschlagkanten 32a, 32b in der Strecklage (Fig.15 und 16) direkt aneinander an, während diese einander gegenüberliegenden Anschlagkanten 32a, 32b sich in der Krümmungslage des Schlauches 1 voneinander entfernen. Durch diese Ausbildung und Anordnung der Anschlagplatten 32 wird die Strecklage des Schlauches 1 auf besonders stabile Art und Weise begrenzt.

Die Klammern 26, 26a und die an ihren Mittelabschnitten 31 vorgesehenen Anschlagplatten 32 können gemeinsam auf der Außenseite des Abdeckbandes 5 befestigt sein, und zwar in der gleichen Weise wie zuvor geschildert, nämlich vorzugsweise durch Nieten oder Punktschweißen.

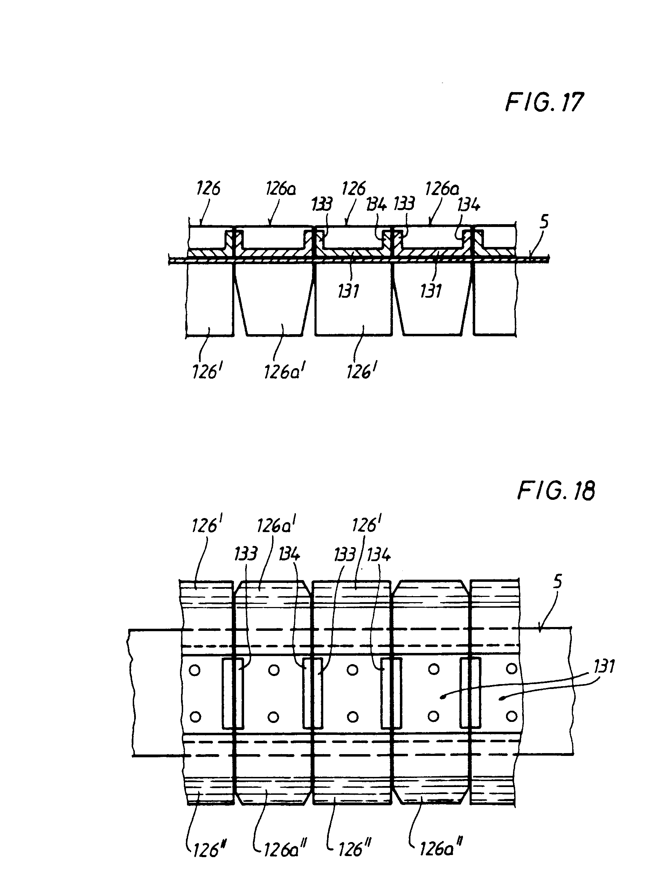

Eine andere Abwandlungsmöglichkeit des Beispieles gemäß den Fig.12 bis 14 ist in den Fig.17 und 18 veranschaulicht. Auch hier sind wiederum gleichartig ausgebildete Teile mit denselben Bezugszeichen wie zuvor bezeichnet.

Da sich diese abgewandelte Ausführungsform gemäß Fig.17 und 18 lediglich auf ein zusätzliches Merkmal der ansonsten gleichartigen Klammern bezieht, werden diese Klammern im wesentlichen gleichartig bezeichnet wie in den Fig.12 bis 14, jedoch unter Voranstellung einer 1, d.h. in Längsrichtung des Abdeckbandes 5 sind auf dessen Außenseite wiederum unmittelbar aneinandergrenzende und sich einander abwechselnde Klammern 126 und 126a befestigt, die in Querrichtung gleichartig geformt bzw. gebogen sind wie die Klammern 26 und 26a der Fig.12 bis 14 und somit an ihren entgegengesetzten Enden etwa rechtwinklig abgebogene Seitenschenkel 126', 126'' bzw. 126a', 126a'' sowie - im Schlauchquerschnitt betrachtet - einen U-förmig gebogenen Mittelabschnitt 131 aufweisen. Auch in diesem Ausführungsbeispiel sind alle Klammern 126, 126a so auf dem Abdeckband 5 befestigt, daß sie in Längsrichtung dieses Abdeckbandes 5 unmittelbar aneinander anschließen (in der Strecklage) und genau zueinander fluchten.

Das besondere Merkmal dieser Abwandlung gemäß Fig.17 und 18 ist nun darin zu sehen, daß die Klammern 126, 126a an den beiden in Schlauchlängsrichtung zeigenden Enden ihrer Mittelabschnitte 131 jeweils einstückige, etwa rechtwinklig nach außen (in Fig.17 nach oben) abgebogene Anschlaglappen 133, 134 aufweisen. Die jeweils nach außen weisenden Seiten dieser Anschlaglappen 133, 134 sind dabei bündig zu den einander gegenüberliegenden Außenkanten von einander benachbarten Klammern 126, 126a vorgesehen. Wenn auf diese Weise der - in den Fig.17 und 18 nicht dargestellte, aber aus den Fig.12 bis 14 ohne weiteres entnehmbare - Energieführungsschlauch in seine Strecklage kommt bzw. sich dort befindet, dann kommen die gegeneinander gerichteten Anschlaglappen 133, 134 einander benachbarter Klammern 126, 126a aneinander zur Anlage, und zwar derart, daß der Schlauch in dieser Strecklage eine leichte Vorspannung in Richtung seiner Krümmungslage erhält. Diese Ausbildung wirkt sich besonders stabilisierend im Sinne einer gewünschten Versteifung des sich in seiner Strecklage befindlichen Schlauches aus.

Es versteht sich von selbst, daß im Rahmen der Erfindung noch zahlreiche andere vorteilhafte Ausgestaltungen und Weiterbildungen des Schlauches insbesondere im Bereich des Abdeckbandes und der Klammern möglich sind. Wenn man sich demgemäß etwa im Sinne der Fig.12 bis 18 vorstellt, daß die Darstellung in Fig.6 auch etwa gleichartig eine äußere Aufsicht auf die den Längsschlitz 4 enthaltende Schlauchlängsseite sein könnte, dann leuchtet es ein, ohne daß dies zusätzlich veranschaulicht werden muß, daß es für bestimmte Ausführungsarten und Erfordernisse auch möglich ist, die - in Schlauchquerrichtung betrachtet - relativ kurzen Klammern 6, 6' gemäß Fig.2 bis 7 einerseits und die relativ langen Klammern 26, 26a bzw. 126, 126a gemäß den Fig.12 bis 18 andererseits miteinander zu kombinieren, so daß diese beiden verschiedenen Klammerarten beispielsweise entlang der Länge oder einer Teillänge des Schlauches 1 einander abwechselnd vorgesehen sein können, und zwar sowohl eng aneinanderliegend als auch voneinander beabstandet (im letzten Falle kommt selbstverständlich nur die Klammerausführung mit den Fig.12 bis 14 in Frage).

Eine andere Ausführungsvariante ist ebenfalls ohne weitere zeichnerische Darstellung ohne weiteres vorstellbar. Hiernach könnte nämlich ein zweites biegsames Abdeckband (gleichartig ausgebildet wie das erste Abdeckband 5) den Längsschlitz 4 auf der anderen Seite des Schlauches 1 abdecken und dabei an den Klammern an deren dem ersten Abdeckband gegenüberliegenden Seite befestigt sein. Hiernach könnten also die Klammern zwischen zwei gleichartigen Abdeckbändern so ausgebildet und befestigt sein, daß der Längsschlitz des Energieführungsschlauches wiederum in der geschilderten Weise zuverlässig und sauber abgedeckt ist. Dabei ist es im Prinzip gleichgültig, welche Klammerausführung (lange oder kurze Klammerausführung) benutzt wird; im Sinne einer besonderen glatten Abdeckung dürfte dabei im allgemeinen jedoch die Ausführung als kurze Klammern 6 bzw. 6′ vorgezogen werden.

## Patentansprüche

1. Zwischen einer Strecklage und einer gekrümmten Lage abbiegbarer Energieführungsschlauch, enthaltend C-förmig gestaltete und dadurch an einer Längsseite des Schlauches einen durchgehenden Längsschlitz (4) bildende Schlauchglieder (3, 3′), die mit ihrem Querschnittsprofil derart ineinandergreifen, daß benachbarte Schlauchglieder begrenzt gegeneinander beweglich sind, ferner enthaltend ein den Längsschlitz verschließendes biegsames Abdeckband (5, 5'), das mit wenigstens einigen Schlauchgliedern lösbar verbunden ist, gekennzeichnet durch folgende Merkmale:
   a) das Abdeckband (5, 5′) ist mit Hilfe von Klammern (6, 6′, 26, 26a) in den Längsschlitz (4) eingeführt und mit den C-förmigen Schlauchgliedern (3, 3′) verbunden;
   b) diese Klammern (6, 6′, 26, 26a) sind auf der einen Seite des Abdeckbandes (5, 5′) rechtwinklig zur Bandlängsrichtung verlaufend befestigt, wobei die gegenüberliegenden Klammerenden (6a, 6b, 6b′, 26′, 26″, 26a′, 26a″) jeweils wenigstens ein C-förmiges Schlauchglied (3, 3′) im Bereich der gegenüberliegenden Längsränder (4a, 4b) des Längsschlitzes (4) hinter- bzw. übergreifen.

2. Energieführungsschlauch nach Anspruch 1, dadurch gekennzeichnet, daß die Klammern (6) mit gleichen Abständen zueinander über die Länge des Abdeckbandes (5, 5′) verteilt sind.

3. Energieführungsschlauch nach Anspruch 1, dadurch gekennzeichnet, daß die Klammern (6) zumindest in einem Längsabschnitt des Schlauches (1) aneinander angrenzend am Abdeckband (5) befestigt sind.

4. Energieführungsschlauch nach Anspruch 1, dadurch gekennzeichnet, daß die Klammern (6) aus flachen, abgebogenen Blechstreifen hergestellt und vorzugsweise durch Nieten oder Punktschweißen auf dem Abdeckband (5, 5′) befestigt sind.

5. Energieführungsschlauch nach Anspruch 1 und/oder 4, dadurch gekennzeichnet, daß zwischen den die Schlauchglieder (3) hintergreifenden Klammerenden (6a, 6b) und dem Abdeckband (5, 5′) jeweils ein U-förmiger Führungskanal (7) gebildet ist, in dem die den Längsschlitz (4) begrenzenden Kanten der Schlauchglieder gleitend geführt sind.

6. Energieführungsschlauch nach Anspruch 1, dadurch gekennzeichnet, daß wenigstens einige Klammern (6′) an ihren Enden (6b′) einen gegen die Innenseite des zugehörigen Schlauches (3′) gerichteten Vorsprung (9) aufweisen, der in eine passende Ausnehmung (10) an der Innenseite dieses Schlauchgliedes eingreift.

7. Energieführungsschlauch nach Anspruch 1, dadurch gekennzeichnet, daß das Abdeckband (5) und die Klammerenden im zusammengeschobenen Zustand des Schlauches (1) mit den Schlauchgliedern (3) verbunden sind.

8. Energieführungsschlauch nach Anspruch 1, dadurch gekennzeichnet, daß das Abdeckband (5) und die Klammerenden im auseinandergezogenen Zustand des Schlauches (1) mit den Schlauchgliedern (3) verbunden sind.

9. Energieführungsschlauch nach Anspruch 1, dadurch gekennzeichnet, daß über die Länge des Schlauches (1) wenigstens eine Einrichtung (11, 21) zum nachstellenden Auseinanderziehen und Zusammenschieben des Schlauches (1) gegenüber dem Abdeckband (5) vorgesehen ist, wobei die Nachstelleinrichtung (11, 21) einen am Abdeckband (5) befestigten ersten Einrichtungsteil (12, 22) sowie einen am Schlauch (1) befestigten zweiten Einrichtungsteil (14, 23) enthält und wobei diese beiden

Einrichtungteile durch eine spindelartige Einstellschraube (19, 25) relativ gegeneinander verlagerbar sind.

10. Energieführungsschlauch nach Anspruch 9, dadurch gekennzeichnet, daß der erste Einrichtungsteil durch einen sich rechtwinklig zur Längsachse des Schlauches (1) auf dem Abdeckband (5) erstreckenden Halterungswinkel (12) mit einem aufrecht stehenden, flanschartigen Schenkel (13) und der zweite Einrichtungsteil durch einen sich rechtwinklig zur Schlauchlängsachse und quer über die ganze Schlauchbreite erstreckenden Halterungsbügel (14) gebildet ist, der einen parallel zum Schenkel des Halterungswinkels verlaufenden, aufrecht stehenden, flanschartigen Bügelschenkel (15) besitzt und an der einen Außenlängsseite des Schlauches (1) über ein Gelenk (16) von einer manschettenartigen, etwa C-förmigen Halterung (17) schwenkbar getragen wird, die dem Außenumfang der Schlauchglieder (3) angepaßt und an einem dieser Glieder befestigt, vorzugsweise angenietet ist.

11. Energieführungsschlauch nach Anspruch 9, dadurch gekennzeichnet, daß der erste Einrichtungsteil durch einen an einer Klammer (6) des Abdeckbandes (5) befestigten Innengewindeteil (22) und der zweite Einrichtungsteil durch einen sich rechtwinklig zur Schlauchlängsachse und quer über die ganze Schlauchbreite erstreckenden, bügelartigen Halterungsflansch (23) gebildet ist, der an der einen Außenlängsseite des Schlauches (1) über ein Schwenkgelenk von einer manschettenartigen, etwa C-förmigen Halterung (24) getragen wird, die dem Außenumfang der Schlauchglieder angepaßt und an wenigstens einem Schlauchglied befestigt, vorzugsweise angenietet ist.

12. Energieführungsschlauch nach Anspruch 1, dadurch gekennzeichnet, daß die Schlauchglieder (3) Teile eines wendelförmig gewickelten und nachträglich in Längsrichtung aufgeschlitzten Schlauches (1) sind.

13. Energieführungsschlauch nach Anspruch 1, dadurch gekennzeichnet, daß die Schlauchglieder (3′) als C-förmige Einzelglieder hergestellt und rechtwinklig zur Schlauchlängsachse (1c) verlaufend zu einer vorbestimmten Schlauchlänge miteinander verbunden sind.

14. Energieführungsschlauch nach Anspruch 1, gekennzeichnet durch eine Ausführung als Doppelschlauch (1′), wobei zwei identisch hergestellte Einzelschläuche (1) mit ihren Längsschlitzen (4) gegeneinander gerichtet und durch ein gemeinsames Abdeckband (5′) für ihre Längsschlitze miteinander verbunden sind.

15. Energieführungsschlauch nach Anspruch 1 und/oder 5, dadurch gekennzeichnet, daß die Klammern (6, 6′) auf der zum Schlauchinnern weisenden Innenseite des Abdeckbandes (5, 5′) befestigt sind, das auf der Außenseite des Schlauches (1) angeordnet ist.

16. Energieführungsschlauch nach Anspruch 1 und/oder 5, dadurch gekennzeichnet, daß das Abdeckband (5) sich an der Schlauchinnenseite befindet und die Klammern (26, 26a) auf der nach außen weisenden Seite des Abdeckbandes angebracht sind und dabei die Außenseite des Schlauches (1) übergreifen.

17. Energieführungsschlauch nach Anspruch 16, dadurch gekennzeichnet, daß die benachbarten Klammern (26, 26a) in Längsrichtung des Schlauches (1) unmittelbar aneinander anschließen und - im Schlauchquerschnitt betrachtet - die Außenseite der C-förmigen Schlauchglieder (3) so weit übergreifen, daß sie an wenigstens einem Klammerende, vorzugsweise an beiden Klammerenden abgewinkelte Seitenschenkel (26′, 26″, 26a′, 26a″) besitzen, deren einander benachbart gegenüberliegenden Seitenkanten (27/28, 29/30) Anschlagkanten bilden, die einerseits in der Strecklage des Schlauches (1) einen Abstand voneinander aufweisen, während sie andererseits in der äußersten Krümmungslage aneinander anliegen und diese begrenzen.

18. Energieführungsschlauch nach Anspruch 17, dadurch gekennzeichnet, daß die Seitenschenkel der Klammern in der Seitenansicht des Schlauches eine sich von der den Schlitz enthaltenden Schlauchlängsseite zur entgegengesetzten Schlauchlängsseite verjüngende Trapezform besitzen.

19. Energieführungsschlauch nach Anspruch 17, dadurch gekennzeichnet, daß die Seitenschenkel (26′, 26″, 26a′, 26a″) der Klammern (26, 26a) - in der Seitenansicht und in Längsrichtung des Schlauches (1) betrachtet - einander abwechselnd eine Rechteckform und eine sich von der den Schlitz (4) enthaltenden Schlauchlängsseite zur entgegengesetzten Schlauchlängsseite verjüngende, symmetrische Trapezform besitzen.

20. Energieführungsschlauch nach Anspruch 17, dadurch gekennzeichnet, daß die Klammern (26, 26a) - im Querschnitt des Schlauches (1) - einen Mittelabschnitt (31) mit einer etwa eckigen U-Form aufweisen, der von der Schlauchaußenseite her in den Schlitz (4) eingepaßt ist.

21. Energieführungsschlauch nach Anspruch 20, dadurch gekennzeichnet, daß auf den flachen Außenseiten der Klammermittelabschnitte (31) jeweils eine ebene Anschlagplatte (32) derart befestigt ist, daß von den in Längsrichtung des Schlauches (1) aneinander anschließenden Klammern (26, 26a) jede Klammer von der Anschlagplatte der einen benachbarten Klammer etwas übergriffen wird, während die zu ihr gehörende Anschlagplatte (32) den Mittelabschnitt der anderen benachbarten Klammer etwas übergreift, wobei die Anschlagplatten aller einander benachbarten Klammern mit ihren gegeneinander gerichteten Anschlagkanten (32a, 32b) in der Strecklage des Schlauches aneinander anliegen.

22. Energieführungsschlauch nach Anspruch 21, dadurch gekennzeichnet, daß die Klammern (26, 26a) und die an ihren Mittelabschnitten (31) vorgesehenen Anschlagplatten (32) gemeinsam, vorzugsweise durch Nieten oder Punktschweißen, auf der Außenseite des Abdeckbandes (5) befestigt sind.

23. Energieführungsschlauch nach Anspruch 20, dadurch gekennzeichnet, daß die Klammern (126, 126a) an den beiden in Längsrichtung des Schlauches zeigenden Enden ihrer Mittelabschnitte (131) einstückige, etwa rechtwinklig nach außen abgebogene Anschlaglappen (133, 134) derart aufweisen, daß die gegeneinander gerichteten Anschlaglappen (133, 134) einander benachbarter Klammern (126, 126a) in der Strecklage des Schlauches aneinander anliegen und der Schlauch in dieser Strecklage eine leichte Vorspannung besitzt.

24. Energieführungsschlauch nach wenigstens einem der vorhergehenden Ansprüche, dadurch gekennzeichnet, daß ein zweites biegsames Abdeckband den Längsschlitz auf der anderen Seite des Schlauches abdeckt und an den Klammern an deren dem ersten Abdeckband gegenüberliegenden Seite befestigt ist.

**Claims**

1. Energy conducting hose which can be bent between a straight position and a curved position, containing elements (3, 3' ) which are C-shaped and thus form a continuous longitudinal slot (4) on one long side of the hose and which interengage with their cross-sectional profile in such a way that adjacent hose elements are capable of limited movement relative to one another, and also containing a flexible cover band (5, 5' ) which closes the longitudinal slot and is releasably connected to at least some hose elements, characterised by the following features:

   a) the cover band (5, 5' ) is inserted with the aid of clamps 6, 6', 26, 26a) into the longitudinal slot (4) and connected to the C-shaped hose elements (3, 3' ):

   b) these clamps (6, 6', 26, 26a) are fixed on one side of the cover band (5, 5' ) so that they run at right angles to the longitudinal direction of the band, and the clamp ends (6a, 6b, 6b', 26', 26", 26a', 26a") which lie opposite one another engage behind or over in each case at least one C-shaped hose element (3, 3' ) in the region of the opposite long edges (4a, 4b) of the longitudinal slot (4).

2. Energy conducting hose as claimed in claim 1, characterised in that the clamps (6) are distributed at equal distances from one another over the length of the cover band (5, 5' ).

3. Energy conducting hose as claimed in claim 1, characterised in that the clamps (6) are fixed at least in one long section of the hose (1) so that they adjoin one another on the cover band (5).

4. Energy conducting hose as claimed in claim 1, characterised in that the clamps (6) are produced from flat bend sheet material strips and are preferably fixed on the cover band (5, 5' ) by riveting or spot-welding.

5. Energy conducting hose as claimed in claim 1 and/or 4, characterised in that between the clamp ends (6a, 6b) which engage behind the hose elements (3) and the cover band (5, 5' ) a U-shaped guide channel (7) is formed in each case in which the edges of the hose elements which define the longitudinal slot (4) are slidably guided.

6. Energy conducting hose as claimed in claim 1, characterised in that at least some clamps (6' ) have on their ends (6b' ) a projection (9) which is directed towards the inner face of the appertaining hose (3' ) and engages in a matching recess (10) on the inner face of this hose element.

7. Energy conducting hose as claimed in claim 1, characterised in that the cover band (5) and the clamp ends are connected to the hose elements (3) when the hose (1) is in the state where it is pushed together.

8. Energy conducting hose as claimed in claim 1, characterised in that the cover band (5) and the clamp ends are connected to the hose elements (3) when the hose (1) is in the extended state.

9. Energy conducting hose as claimed in claim 1, characterised in that over the length of the hose at least one device (11, 21) is provided for the adjustable extension and pushing together of the hose (1) relative to the cover band (5), wherein the adjustment device (11, 21) contains a first part (12, 22) which is fixed on the cover band (5) and a second part (14, 23) which is fixed on the hose (1), these two parts being movable relative to one another by means of a spindle-like setscrew (19, 25).

10. Energy conducting hose as claimed in claim 9, characterised in that the first part is formed by a retaining angle (12) which extends a right angles to the longitudinal axis of the hose (1) on the cover band (5) with an upright flange-like arm (13), and the second part is formed by a retaining clip (14) which extends at right angles to the longitudinal axis of the hose and obliquely over the entire width of the hose, has an upright flange-like arm (15) running parallel to the arm of the retaining angle and on one outer long side of the hose (1) is borne by an approximately C-shaped sleeve-like mounting (17) so as to be pivotable about a joint (16), the said mounting being adapted to the external periphery of the hose elements (3) and fixed, preferably riveted, onto one of these elements.

11. Energy conducting hose as claimed in claim 9, characterised in that the first part of the device is formed by an inner threaded portion (22) which is fixed on a clamp (6) of the cover band (5) and the second part is formed by a clip-like retaining flange (23) which extends at right angles to the longitudinal axis of the hose and obliquely over the entire width of the hose and is borne on one outer long side of the hose (1) so as to be pivotable about a joint by an approximately C-shaped sleeve-like mounting (24) which is adapted to the outer periphery of the hose elements and is fixed, preferably riveted, onto at least one hose element.

12. Energy conducting hose as claimed in claim 1, characterised in that the hose elements (3) are parts of a hose (1) which is spirally wound and subsequently slotted in the longitudinal direction.

13. Energy conducting hose as claimed in claim 1, characterised in that the hose elements (3' ) are produced as C-shaped individual elements and are connected to one another so that they run at right angles to the longitudinal axis (1c) to form a predetermined length of hose.

14. Energy conducting hose as claimed in claim 1, characterised by a construction as a double hose (1' ) in which two identically produced single hoses (1) are directed with their longitudinal slots (4) towards one another and and connected to one another by a common cover band (5' ) for their longitudinal slots.

15. Energy conducting hose as claimed in claim 1 and/or 5, characterised in that the clamps (6, 6' ) are fixed on the inner face, which points to the interior of the hose, of the cover band (5, 5' ) which is arranged on the outer face of the hose (1).

16. Energy conducting hose as claimed in claim 1 and/or 5, characterised in that the cover band (5) is located on the inner face of the hose and the clamps (26, 26a) are mounted on the side of the cover band pointing outwards and thus engage over the outer face of the hose (1).

17. Energy conducting hose as claimed in claim 16, characterised in that the adjacent clamps (26, 26a) immediately adjoin one another in the longitudinal direction of the hose (1) and - when viewed in the transverse direction of the hose - engage over the outer face of the C-shaped hose elements (3) to such an extent that on at least one end, preferably on both ends, of the clamp they have bent side arms (26', 26", 26a', 26a"), of which the opposing side edges (27/28, 29/30) lying adjacent to one another form stop edges which on the one hand are spaced from one another in the straight position of the hose (1), whilst on the other hand in the outermost curved position they butt against one another and define this position.

18. Energy conducting hose as claimed in claim 17, characterised in that the side arms of the clamps in the side view of the hose have a trapezoidal shape which tapers from the long side of the hose containing the slot to the opposite long side of the hose.

**19.** Energy conducting hose as claimed in claim 17, characterised in that the side arms (26', 26", 26a', 26a") of the clamps (26, 26a) - viewed in the side view and in the longitudinal direction of the hose (1) - alternately have a rectangular shape and a symmetrical trapezoidal shape which tapers from the long side of the hose containing the slot (4) to the opposite long side of the hose.

**20.** Energy conducting hose as claimed in claim 17, characterised in that the clamps (26, 26a) - when viewed in the cross-section of the hose (1) - have a central section (31) which has a rather angular U shape and is fitted into the slot (4) from the outside of the hose.

**21.** Energy conducting hose as claimed in claim 20, characterised in that a flat stop plate (32) is fixed in each case on the flat outer faces of the central clamp sections (31) in such a way that of the clamps (26, 26a) which lie adjacent to one another in the longitudinal direction of the hose (1) each clamp is engaged over somewhat by the stop plate of an adjacent clamp, whilst the stop plate (32) which belongs to it engages somewhat over the central section of the other adjacent clamp, so that the stop plates of all clamps which are adjacent to one another butt directly against one another with their stop edges (32a, 32b) in the curved position of the hose.

**22.** Energy conducting hose as claimed in claim 21, characterised in that the clamps (26, 26a) and the stop plates (32) provided on their central section (31) are fixed jointly, preferably by riveting or spot-welding, on the outer face of the cover band (5).

**23.** Energy conducting hose as claimed in claim 20, characterised in that the clamps (126, 126a) have at both ends, which point in the longitudinal direction of the hose, of their central sections (131) integral stop tabs (133, 134) which are bent approximately at right angles outwards in such a way that the stop tabs (133, 134) which are directed towards one another of adjacent clamps (126, 126a) butt against one another in the straight position of the hose and in this straight position the hose is tensioned slightly.

**24.** Energy conducting hose as claimed in at least one of the preceding claims, characterised in that a second flexible cover band covers the longitudinal slot on the other side of the hose and is fixed to the clamps on the side of the hose lying opposite to the first cover band.

## Revendications

**1.** Gaine de transmission d'énergie pouvant fléchir entre une position tendue et une position recourbée et comprenant des éléments (3, 3') en C formant ainsi une fente longitudinale continue (4) sur un côté long de la gaine, le profil transversal desdits éléments (3, 3') de la gaine étant tel qu'ils s'emboitent les uns dans les autres de manière que les éléments voisins aient une liberté limitée de mouvement les uns par rapport aux autres, ladite gaine comprenant par ailleurs une bande flexible de couverture (5, 5') qui obture la fente longitudinale et qui est reliée de manière amovible à au moins certains des éléments de la gaine,

caractérisée par les particularités suivantes :

a) la bande de couverture (5, 5') est introduite au moyen d'agrafes (6, 6', 26, 26a) dans la fente longitudinale (4) et reliée aux éléments (3, 3') en C de la gaine ;

b) ces agrafes (6, 6', 26, 26a) sont fixées sur un côté de la bande de couverture (5, 5') en étant orientées perpendiculairement à la direction de la longueur de la bande, les extrémités opposées (6a, 6b, 6b', 26', 26", 26a', 26a") de chacune des agrafes passant par-dessus ou par derrière au moins un élément en C (3, 3') de la gaine dans la région des bords longitudinaux opposés (4a, 4b) de la fente longitudinale (4).

**2.** Gaine de transmission d'énergie selon la revendication 1, caractérisée en ce que les agrafes (6) sont réparties à des distances égales les unes des autres sur la longueur de la bande de couverture (5, 5').

**3.** Gaine de transmission d'énergie selon la revendication 1, caractérisée en ce que les agrafes (6) sont fixées à la bande de couverture (5) en étant juxtaposées au moins sur un tronçon de la longueur de la gaine (1).

**4.** Gaine de transmission d'énergie selon la revendication 1, caractérisée en ce que les agrafes (6) sont réalisées en feuillards plans de tôle qui sont repliés et sont fixés sur la bande de couverture (5, 5') de préférence par rivetage ou par soudage par points.

**5.** Gaine de transmission d'énergie selon la revendication 1 et/ou 4, caractérisée en ce qu'un canal de guidage en étrier (7), dans lequel les bords des éléments de la gaine qui délimitent la fente longitudinale sont guidés coulissants, est formé entre les extrémités (6a, 6b) des agrafes qui passent derrière les éléments (3) de la gaine et la bande de couverture (5, 5').

6. Gaine de transmission d'énergie selon la revendication 1, caractérisée en ce qu au moins certaines des agrafes (6') comportent aux extrémités (6b') une saillie (9) orientée vers le côté intérieur de la gaine correspondante (3') et pénétrant dans une cavité correspondante (10) située sur le côté intérieur de cet élément de gaine.

7. Gaine de transmission d'énergie selon la revendication 1, caractérisée en ce que la bande de couverture (5) et les extrémités des agrafes sont reliées aux éléments (3) de la gaine (1) alors que celle-ci est à l'état de contraction.

8. Gaine de transmission d'énergie selon la revendication 1, caractérisée en ce que la bande de couverture (5) et les extrémités des agrafes sont reliées aux éléments (3) de la gaine (1) alors que celle-ci est à l'état d'extension.

9. Gaine de transmission d'énergie selon la revendication 1, caractérisée en ce qu'au moins un dispositif (11, 21) de réajustement de la gaine (1) par éxtension ou contraction par rapport à la bande de couverture (5) est prévu sur la longueur de la gaine (1), le dispositif de réajustement (11, 21) comprenant une première pièce (12, 22) fixée sur la bande de couverture (5) ainsi qu'une seconde pièce (14, 23) fixée à la gaine (1) et ces deux pièces du dispositif étant déplaçables l'une par rapport à l'autre au moyen d'une vis de réglage (19, 25) du type d'une tige filetée.

10. Gaine de transmission d'énergie selon la revendication 9, caractérisée en ce que la première pièce du dispositif est formée d'une cornière de support (12) orientée sur la bande de couverture (5) perpendiculairement à l'axe longitudinal de la gaine (1) et comportant une aile (13) formant une bride placée debout et la seconde pièce du dispositif est formée d'un étrier de support (14) orienté à angle droit par rapport à l'axe longitudinal de la gaine et transversalement sur la totalité de la largeur de celle-ci, cet étrier comportant une aile en forme de bride (15) placée debout, parallèlement à l'aile de la cornière de support et étant supportée sur l'un des côtés longitudinaux extérieurs de la gaine (1), par l'intermédiaire d'une articulation (16), par une attache approximativement en C (17) du type d'une manchette, cette attache étant conformée suivant le pourtour extérieur des éléments (3) de la gaine et étant fixée, de préférence rivetée, sur l'un de ces éléments.

11. Gaine de transmission d'énergie selon la revendication 9, caractérisée en ce que la première pièce du dispositif est formée d'une pièce taraudée (22) fixée à une agrafe (6) de la bande de couverture (5) et la seconde pièce du dispositif est formée d'une bride de support en étrier (23) orientée à angle droit par rapport à l'axe longitudinal de la gaine et transversalement sur la totalité de la largeur de la gaine, cette bride de support étant supportée sur l'un des côtés extérieurs longs de la gaine (1), par l'intermédiaire d'une articulation, par une attache approximativement en C en forme de manchette qui épouse le contour extérieur des éléments de la gaine et qui est fixée, de préférence rivetée sur au moins un élément de la gaine.

12. Gaine de transmission d'énergie selon la revendication 1, caractérisée en ce que les éléments (3) de la gaine font partie d'une gaine (1) enroulée en hélice et ensuite fendue dans la direction de la longueur.

13. Gaine de transmission d'énergie selon la revendication 1, caractérisée en ce que les éléments (3') de la gaine sont réalisés sous forme d'éléments individuels en C et reliés les uns aux autres en étant orientés perpendiculairement à l'axe longitudinal (1c) de la gaine de manière à former une longueur prédéterminée de gaine.

14. Gaine de transmission d'énergie selon la revendication 1, caractérisée par un mode d'exécution en gaine double (1'), les fentes longitudinales (4) des gaines individuelles (1) réalisées de manière identique étant tournées l'une vers l'autre et ces gaines individuelles étant reliées l'une à l'autre par une bande commune (5') de couverture de leurs fentes longitudinales.

15. Gaine de transmission d'énergie selon la revendication 1 et/ou 5, caractérisée en ce que les agrafes (6, 6') sont fixées sur le côté intérieur, tourné vers l'intérieur de la gaine, de la bande de couverture (5, 5') qui est disposée sur le côté extérieur de la gaine (1).

16. Gaine de transmission d'énergie selon la revendication 1 et/ou 5, caractérisée en ce que la bande de couverture (5) se trouve sur le côté intérieur de la gaine et les agrafes (26, 26a) sont montées sur le côté de la bande de couverture qui est tourné vers l'extérieur et passent alors sur le côté extérieur de la gaine (1).

17. Gaine de transmission d'énergie selon la revendication 16, caractérisée en ce que les agrafes voisines (26, 26a) se succèdent immédiatement dans la direction de la longueur de la gaine (1) et passent pardessus le côté extérieur - observé sur la section de la gaine - des éléments en C(3) de la gaine sur une distance suffisante pour qu'elles possèdent à au moins une extrémité, de préférence aux deux extrémités, des ailes latérales (26', 26", 26a', 26a") dont les bords latéraux voisins qui sont face à face (27/28, 29/30) forment des arêtes de butée qui d'une part sont à distance l'une de l'autre lorsque la gaine (1) est en position tendue, tandis que, d'autre part, en position de flexion maximale, elles sont appliquées les unes contre les autres et limitent cette flexion.

18. Gaine de transmission d'énergie selon la revendication 17, caractérisée les ailes latérales des agrafes ont en vue en élévation latérale de la gaine une forme trapézoïdale qui se rétricit du côté longitudinal de la gaine qui comporte la fente vers le côté longitudinal opposé de cette gaine.

19. Gaine de transmission d'énergie selon la revendication 17, caractérisée en ce que les ailes latérales (26', 26", 26a', 26a") des agrafes (26, 26a) ont - observées en élévation latérale et dans la direction de la longueur de la gaine (1) - en alternance une forme rectangulaire et une forme trapézoïdale symétrique qui se rétricit du côté longitudinal de la gaine qui comporte la fente (4) vers le côté longitudinal opposé de cette gaine.

20. Gaine de transmission d'énergie selon la revendication 17, caractérisée en ce que les agrafes (26, 26a) ont - en coupe transversale de la gaine (1) - une partie médiane (31) de forme angulaire sensiblement en étrier qui s'ajuste dans la fente (4) par le côté extérieur de la gaine.

21. Gaine de transmission d'énergie selon la revendication 20, caractérisée en ce qu'une plaque plane de butée est fixée sur le côté extérieur plan de la partie médiane (31) de chaque agrafe de manière que chacune des agrafes (26, 26a) qui se succèdent dans la direction de la longueur de la gaine (1) soit légèrement chevauchée par la plaque de butée de l'une des agrafes voisine, tandis que sa plaque de butée (32) chevauche légèrement la partie médiane de l'autre agrafe voisine, les bords de butée tournés l'un vers l'autre (32a, 32b) des plaques de butée de toutes les agrafes voisines étant appliqués l'un contre l'autre lorsque la gaine est en position tendue.

22. Gaine de transmission d'énergie selon la revendication 21, caractérisée en ce que les agrafes (26, 26a) et les plaques de butée (32) prévues sur leur partie médiane (31) sont fixées ensemble, de préférence par rivetage ou soudage par point sur le côté extérieur de la bande de couverture (5).

23. Gaine de transmission d'énergie selon la revendication 20, caractérisée en ce que les agrafes (126, 126a) comportent aux deux extrémités de leur partie médiane (131) tournées dans la direction de la longueur de la gaine des pattes de butée (133, 134) qui sont en une pièce avec elles et qui sont repliées à peu près à angle droit vers l'extérieur de manière que les pattes de butée (133, 134), tournées l'une vers l'autre, des agrafes voisines (126, 126a) s'appliquent l'une contre l'autre lorsque la gaine est en position tendue et la gaine est sous légère précontrainte de traction lorsqu'elle est à cette position tendue.

24. Gaine de transmission d'énergie selon au moins l'une des revendications précédentes, caractérisée en ce qu'une seconde bande souple de couverture recouvre la fente longitudinale sur l'autre côté de la gaine et elle est fixée aux agrafes sur leur côté qui est opposé à celui de la première bande de couverture.

FIG. 1

FIG. 6

*FIG. 2*

*FIG. 3*

*FIG. 4*

*FIG. 5*

*FIG. 8*

*FIG. 7*

EP 0 259 725 B1

FIG. 9

FIG. 10

FIG. 11

FIG.12

FIG.13

FIG.14

FIG.15

FIG.16

FIG.17

FIG.18